# EUROPÄISCHE PATENTSCHRIFT

(11) **EP 1 641 844 B1**
(45) Veröffentlichungstag und Bekanntmachung des Hinweises auf die Patenterteilung: **25.04.2007**
(21) Anmeldenummer: 04763027.2
(22) Anmeldetag: 25.06.2004
(51) Int. Cl.: C08F 10/10, C08F 20/10

(54) **VERFAHREN ZUR HERSTELLUNG VON POLYISOBUTENEN**
METHOD FOR PRODUCING POLYISOBUTENES
PROCEDE DE PRODUCTION DE POLYISOBUTENES

(30) Priorität: 26.06.2003 DE 10328854
(43) Veröffentlichungstag der Anmeldung: 05.04.2006
(73) Patentinhaber: BASF Aktiengesellschaft, 67056 Ludwigshafen (DE)
(72) Erfinder: LANGE, Arno, 67098 Bad Dürkheim (DE); MACH, Helmut, 69115 Heidelberg (DE); RATH, Hans, Peter, 67269 Grünstadt (DE); HILLER, Magit, 97753 Karlstadt (DE)
(74) Vertreter: Reitstötter - Kinzebach
(86) Internationale Anmeldenummer: PCT/EP2004/006919
(87) Internationale Veröffentlichungsnummer: WO 2004/113402

(56) Entgegenhaltungen:
- WO-A-02/48215
- WO-A-02/48216
- WO-A-02/096964
- WO-A-03/074577

## Beschreibung

Die vorliegende Erfindung betrifft ein Verfahren zur Herstellung von bifunktionellen Polyisobutenen sowie nach dem Verfahren erhältliche bifunktionelle Polyisobutene und bestimmte Funktionalisierungsprodukte davon.

Homo- und Copolymere des Isobutens finden in vielfältiger Weise Verwendung, beispielsweise zur Herstellung von Kraftstoff- und Schmierstoff-Additiven, als Elastomere, als Klebstoffe oder Klebrohstoffe oder als Grundbestandteil von Dichtungs- und Versiegelungsmassen.

Die Herstellung von Polyisobutenen durch lebende kationische Polymerisation von Isobuten ist bekannt. Das eingesetzte Initiatorsystem umfasst in der Regel eine Lewis-Säure und eine organische Verbindung, die mit der Lewis-Säure ein Carbokation oder einen kationogenen Komplex bildet.

Für die Weiterverarbeitung, beispielsweise zu Dichtungs- und Versiegelungsmassen oder zu Klebe(roh)stoffen, besonders geeignete Polyisobutene sind telechel, d.h. sie weisen zwei oder mehr reaktive Endgruppen auf. Bei diesen Endgruppen handelt es sich vor allem um Kohlenstoff-Kohlenstoff-Doppelbindungen, die sich weiter funktionalisieren lassen, oder um mit einem Terminierungsagens funktionalisierte Gruppen. So beschreibt die EP-A 722 957 die Herstellung telecheler Isobuten-Polymere unter Verwendung eines mindestens difunktionellen Initiators, wie Dicumylchlorid. Nachteilig an den bekannten Verfahren ist, dass die beschriebenen aromatischen Initiatoren zu Indanyl- oder Diindangruppen reagieren können (vgl. Cr. Pratrap, S.A. Mustafa, J.P. Heller, J. Polym. Sci. Part A, Polym. Chem. 1993, 31, S. 2387-2391), was die gezielte Synthese definierter telecheler Polyisobutene beeinträchtigt.

Die Deutsche Offenlegungsschrift 10061727 beschreibt die Herstellung von Isobutenpolymeren mit olefinisch ungesättigten Endgruppen. Zur Herstellung von Isobutenpolymeren mit zwei olefinisch ungesättigten Endgruppen werden bifunktionelle Starter eingesetzt. Die Reaktivität der dabei erhaltenen Endgruppen lässt zu wünschen übrig. Die ältere deutsche Patentanmeldung DE 10232157.6 beschreibt eine kationische Isobutenpolymerisation unter Verwendung von 3-Chlorcyclopenten als Initiator.

Die WO 02/48215, WO 02/48216 und WO 02/96964 beschreiben die Herstellung von lsobutenpolymeren in Gegenwart einer Lewissäure und eines Initiators. Als geeignete Initiatoren werden in der allgemeinen Beschreibung unter anderem Allylhalogenide, wie 2-Chlor-2-methylbuten-3 aufgeführt.

Aufgabe der vorliegenden Erfindung war daher, ein Verfahren bereitzustellen, mit welchem bifunktionelle Polyisobutene mit einem einfachen Initiatorsystem erhältlich sind.

Die Aufgabe wird gelöst durch ein Verfahren zur Herstellung von bifunktionellen Polyisobutenen, bei dem man Isobuten oder ein Isobuten-haltiges Monomerengemisch in Gegenwart einer Lewis-Säure und einer Verbindung der Formel I 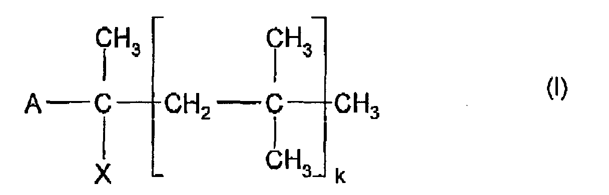 worin
- X: für Halogen, C₁-C₈-Alkoxy oder C₁-C₆-Acyloxy steht,
- A¹: für einen Rest der Formeln A.2 oder A.3 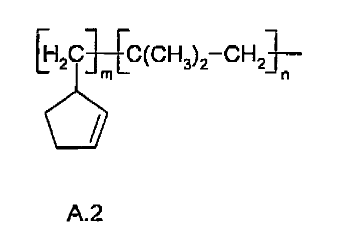 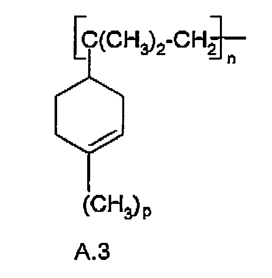 worin
m für 0 oder 1 steht;
n für eine Zahl von 0 bis 3, insbesondere 0, 1 oder 2 steht, und
p für 0 oder 1 steht und
- k: für eine Zahl von 0 bis 5 steht,
polymerisiert.

Demnach betrifft die Erfindung ein Verfahren zur Herstellung bifunktioneller Polymere, bei welchem man Isobuten oder ein Isobuten-haltiges Monomerengemisch in Gegenwart einer Lewis-Säure mit einer Verbindung der hier definierten Formel I umsetzt. Die Verbindungen I werden nachfolgend auch als Initiatoren oder Initiator-Verbindungen I bezeichnet.

Durch das erfindungsgemäße Verfahren sind insbesondere Isobuten-Polymere erhältlich, die an einem Terminus (sogenannter Kettenanfang) eine olefinisch ungesättigte Gruppe A und am anderen Terminus (sogenanntes distales Kettenende) ein Halogenatom enthalten. Je nach Aufarbeitungsbedingungen können auch Isobuten-Polymere erhalten werden, die anstelle des Halogenatoms eine olefinische Doppelbindung enthalten. Die Doppelbindung kann dann in an sich bekannter Weise in eine andere Funktionalität, z. B. OH, SH, Silan, Siloxan, Hydroxyphenyl, Succinylester, Succinimid, Oxiran, Carboxl etc., umgewandelt werden.

k steht vorzugsweise für 0 oder 1 und speziell für 0.

Halogen steht bevorzugt für Chlor, Brom oder Iod und insbesondere für Chlor.

Die Alkoxygruppen weisen vorzugsweise 1 bis 4 C-Atome auf. Beispiele hierfür sind Methoxy, Ethoxy, Propoxy und Butoxy.

Die Acyloxygruppen weisen vorzugsweise 1 bis 4 C-Atome auf und umfassen beispielsweise Acetyloxy, Propionyloxy und Butyroxy.

In Formel I steht X vorzugsweise für Halogen, insbesondere für Chlor.

In Verbindungen I mit A = A.2 steht m vorzugsweise für 1.

In Verbindungen I mit A = A.3 steht n vorzugsweise für 0. p steht vorzugsweise für 1.

Beispiele für Initiator-Verbindungen I sind:
2-Chlor-2-methyl-3-(cyclopenten-3-yl)propan, 2-Chlor-2-methyl-4-(cyclohexen-4-yl)pentan und 2-Chlor-2-(1-methylcyclohexen-4-yl)propan.

Verbindungen I, in denen A für einen Rest A.2 steht, in welchem m für 1 steht, sind beispielsweise durch kontrollierte Umsetzung eines 3-Halogencyclopentens mit Isobuten in Gegenwart einer Lewis-Säure und wie vorstehend beschriebene Terminierung des daraus entstandenen lebenden Isobutenoligomeren erhältlich.

Verbindungen I, in denen A für einen Rest A.3 steht, in welchem n ≠ 0 ist, sind beispielsweise durch kontrollierte Umsetzung von Limonenhydrohalogenid mit Isobuten oder einem Isobutenoligomeren in Gegenwart einer Lewis-Säure und wie vorstehend beschriebene Terminierung des daraus entstandenen lebenden Isobutenoligomeren erhältlich. Das Limonenhydrohalogenid ist durch Hydrohalogenierung, z.B. Hydrochlorierung von Limonen in an sich bekannter Weise erhältlich.

Als Lewis-Säure kommen kovalente Metallhalogenide und Halbmetallhalogenide, die eine Elektronenpaarlücke aufweisen, in Betracht. Derartige Verbindungen sind dem Fachmann bekannt, beispielsweise aus J.P. Kennedy et al. in US 4,946,889, US 4,327,201, US 5,169,914, EP-A-206 756, EP-A-265 053 sowie umfassend in J.P. Kennedy, B. Ivan, "Designed Polymers by Carbocationic Macromolecular Engineering", Oxford University Press, New York, 1991. Sie sind in der Regel ausgewählt unter Halogen-Verbindungen des Titans, des Zinns, des Aluminiums, des Vanadiums oder des Eisens, sowie den Halogeniden des Bors. Bevorzugt sind die Chloride, und im Falle des Aluminiums auch die Monoalkylaluminiumdichloride und die Dialkylaluminiumchloride. Bevorzugte Lewis-Säuren sind Titantetrachlorid, Bortrichlorid, Bortrifluorid, Zinntetrachlorid, Aluminiumtrichlorid, Vanadiumpentachlorid, Eisentrichlorid, Alkylaluminiumdichloride und Dialkylaluminiumchloride. Besonders bevorzugte Lewis-Säuren sind Titantetrachlorid, Bortrichlorid und Bortrifluorid und insbesondere Titantetrachlorid.

Es hat sich bewährt, die Polymerisation in Gegenwart eines Elektronendonors durchzuführen. Als Elektronendonoren kommen aprotische organische Verbindungen in Betracht, die ein an einem Stickstoff, Sauerstoff oder Schwefelatom befindliches, freies Elektronenpaar aufweisen. Bevorzugte Donorverbindungen sind ausgewählt unter Pyridinen wie Pyridin selbst, 2,6-Dimethylpyridin, sowie sterisch gehinderten Pyridinen wie 2,6-Diisopropylpyridin und 2,6-Di-tert-butylpyridin; Amiden, insbesondere N,N-Dialkylamiden von aliphatischen oder aromatischen Carbonsäuren wie N,N-Dimethylacetamid; Lactamen, insbesondere N-Alkyllactamen wie N-Methylpyrrolidon; Ethern, z.B. Dialkylethern wie Diethylether und Diisopropylether, cyclischen Ethern, wie Tetrahydrofuran; Aminen, insbesondere Trialkylaminen wie Triethylamin; Estern, insbesondere C₁-C₄-Alkylestern aliphatischer C₁-C₆-Carbonsäuren wie Ethylacetat; Thioethern, insbesondere Dialkylthioethem oder Alkylarylthioethern, wie Methylphenylsulfid; Sulfoxiden, insbesondere Dialkylsulfoxiden, wie Dimethylsulfoxid; Nitrilen, insbesondere Alkylnitrilen wie Acetonitril und Propionitril; Phosphinen, insbesondere Trialkylphosphinen oder Triarylphosphinen, wie Trimethylphosphin, Triethylphosphin, Tri-n-butylphosphin und Triphenylphosphin und nicht polymerisierbaren, aprotischen siliziumorganischen Verbindungen, die wenigstens einen über Sauerstoff gebundenen organischen Rest aufweisen.

Unter den vorgenannten Donoren sind Pyridin und sterisch gehinderte Pyridin-Derivate sowie insbesondere siliziumorganische Verbindungen bevorzugt.

Bevorzugte derartige siliziumorganische Verbindungen sind solche der allgemeinen Formel III:

R^{a}ₙSi(OR^{b})₄₋ᵣ (III)

worin r für 1, 2 oder 3 steht,
- R^{a}: gleich oder verschieden sein können und unabhängig voneinander C₁-C₂₀-Alkyl, C₃-C₇-Cycloalkyl, Aryl oder Aryl-C₁-C₄-alkyl bedeuten, wobei die drei letztgenannten Reste auch eine oder mehrere C₁-C₁₀-Alkylgruppen als Substituenten aufweisen können, und
- R^{b}: gleich oder verschieden sind und C₁-C₂₀-Alkyl bedeuten oder für den Fall, dass r für 1 oder 2 steht, zwei Reste R^{b} gemeinsam für Alkylen stehen können.

In der Formel III steht r vorzugsweise für 1 oder 2. R^{a} bedeutet vorzugsweise eine C₁-C₈-Alkylgruppe, und insbesondere eine verzweigte oder über ein sekundäres C-Atom gebundene Alkylgruppe, wie Isopropyl, Isobutyl, sec-Butyl, oder eine 5-, 6- oder 7-gliedrige Cycloalkylgruppe, oder eine Arylgruppe, insbesondere Phenyl. Die Variable R^{b} steht vorzugsweise für eine C₁-C₄-Alkylgruppe oder für einen Phenyl-, Tolyl- oder Benzylrest.

Beispiele für derartige bevorzugte Verbindungen sind Dimethoxydiisopropylsilan, Dimethoxyisobutylisopropylsilan, Dimethoxydi-isobutylsilan, Dimethoxydicyclopentylsilan, Dimethoxyisobutyl-2-butylsilan, Diethoxyisobutylisopropylsilan, Triethoxytoluylsilan, Triethoxybenzylsilan und Triethoxyphenylsilan.

Im Rahmen der vorliegenden Erfindung steht C₁-C₄-Alkyl für einen verzweigten oder linearen Alkylrest, wie für Methyl, Ethyl, Propyl, Isopropyl, n-Butyl, sec-Butyl, Isobutyl oder tert-Butyl. C₁-C₈-Alkyl steht darüber hinaus für Pentyl, Hexyl, Heptyl, Octyl und deren Stellungsisomere. C₁-C₂₀-Alkyl steht darüber hinaus für Nonyl, Decyl, Undecyl, Dodecyl, Tridecyl, Tetradecyl, Pentadecyl, Hexadecyl, Heptadecyl, Octadecyl, Nonadecyl, Eicosyl und deren Stellungsisomere.

C₃-C₇-Cycloalkyl steht beispielsweise für Cyclopropyl, Cyclopentyl, Cyclohexyl, Cycloheptyl und Cyclooctyl.

Aryl steht insbesondere für Phenyl, Naphthyl oder Tolyl.

Aryl-C₁-C₄-alkyl steht insbesondere für Benzyl oder 2-Phenylethyl.

Alkylen steht beispielsweise für C₂-C₅-Alkylen, wie 1,2-Ethylen, 1,2- und 1,3-Propylen, 1,4-Butylen und 1,5-Pentylen.

Die Lewis-Säure wird in einer Menge eingesetzt, die zur Bildung des Initiatorkomplexes ausreicht. Das Molverhältnis von Lewis-Säure zu Initiator-Verbindung I beträgt im Allgemeinen 10:1 bis 1:10, insbesondere 1:1 bis 1:4 und speziell 1:1 bis 1:2,5.

Die Lewis-Säure und der Elektronendonor werden vorzugsweise in einem Molverhältnis von 20:1 bis 1:20, besonders bevorzugt von 5:1 bis 1:5 und insbesondere von 2:1 bis 1:2 eingesetzt.

Die Konzentration an Lewis-Säure in der Reaktionsmischung liegt üblicherweise im Bereich von 0,1 bis 200 g/l und insbesondere im Bereich von 1 bis 50 g/l.

Als Isobuten-Einsatzstoffe für das erfindungsgemäße Verfahren eignen sich sowohl Isobuten selbst als auch isobutenhaltige C₄-Kohlenwasserstoffströme, beispielsweise C₄-Raffinate, C₄-Schnitte aus der Isobuten-Dehydrierung, C₄-Schnitte aus Steamcrackern, FCC-Crackern (FCC: Fluid Catalyzed Cracking), sofern sie weitgehend von darin enthaltenem 1,3-Butadien befreit sind. Erfindungsgemäß geeignete C₄-Kohlenwasserstoffströme enthalten in der Regel weniger als 500 ppm, vorzugsweise weniger als 200 ppm Butadien. Bei Einsatz von C₄-Schnitten als Einsatzmaterial übernehmen die von Isobuten verschiedenen Kohlenwasserstoffe die Rolle eines inerten Lösungsmittels.

Es können auch Monomermischungen des Isobutens mit olefinisch ungesättigten Monomeren, welche mit Isobuten unter kationischen Polymerisationsbedingungen copolymerisierbar sind, umgesetzt werden. Das erfindungsgemäße Verfahren ist außerdem zur Blockcopolymerisation von Isobuten mit unter kationischen Polymerisationsbedingungen polymerisierbaren ethylenisch ungesättigten Comonomeren geeignet. Sofern Monomermischungen des Isobutens mit geeigneten Comonomeren copolymerisiert werden sollen, enthält die Monomermischung vorzugsweise mehr als 80 Gew.-%, insbesondere mehr als 90 Gew.-%, und, besonders bevorzugt, mehr als 95 Gew.-% Isobuten, und weniger als 20 Gew.-%, vorzugsweise weniger als 10 Gew.-%, und insbesondere weniger als 5 Gew.-%, Comonomere.

Als copolymerisierbare Monomere kommen Vinylaromaten wie Styrol und α-Methylstyrol, C₁-C₄-Alkylstyrole wie 2-, 3- und 4-Methylstyrol, sowie 4-tert-Butylstyrol, Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1. Als Comonomere kommen weiterhin Olefine in Betracht, die eine Silylgruppe aufweisen wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxyethoxy)silyl]propen, und 1-[Tri(methoxyethoxy)silyl]-2-methylpropen-2.

Zur Herstellung von Blockcopolymeren kann das distale Kettenende, d.h. das vom Kettenanfang, welcher sich vom Initiator ableitet, abgewandte Ende des erhaltenen Isobuten-Polymers, mit Comonomeren, wie den oben aufgeführten, z.B. Vinylaromaten umgesetzt werden. So kann man z.B. zuerst Isobuten homopolymerisieren und anschließend das Comonomer zusetzen. Das dabei neu entstehende Comonomer-stämmige reaktive Kettenende wird entweder desaktiviert oder nach einer der nachstehend beschriebenen Ausführungsformen unter Ausbildung einer funktionellen Endgruppe terminiert oder zur Bildung höherer Blockcopolymere erneut mit Isobuten umgesetzt.

Die Polymerisation wird üblicherweise in einem Lösungsmittel durchgeführt. Als Lösungsmittel kommen alle niedermolekularen, organischen Verbindungen oder deren Gemische in Betracht, die eine geeignete Dielektrizitätskonstante und keine abstrahierbaren Protonen aufweisen und die unter den Polymerisationsbedingungen flüssig sind. Bevorzugte Lösungsmittel sind Kohlenwasserstoffe, z.B. acyclische Kohlenwasserstoffe mit 2 bis 8 und vorzugsweise 3 bis 8 Kohlenstoffatomen wie Ethan, Iso- und n-Propan, n-Butan und seine Isomeren, n-Pentan und seine Isomeren, n-Hexan und seine Isomeren, n-Heptan und seine Isomeren, sowie n-Octan und seine Isomeren, cyclische Alkane mit 5 bis 8 Kohlenstoffatomen wie Cyclopentan, Methylcyclopentan, Cyclohexan, Methylcyclohexan, Cycloheptan, acyclische Alkene mit vorzugsweise 2 bis 8 Kohlenstoffatomen wie Ethen, Iso- und n-Propen, n-Buten, n-Penten, n-Hexen und n-Hepten, cyclische Olefine wie Cyclopenten, Cyclohexen und Cyclohepten, aromatische Kohlenwasserstoffe wie Toluol, Xylol, Ethylbenzol, sowie halogenierte Kohlenwasserstoffe, wie halogenierte aliphatische Kohlenwasserstoffe, z.B. wie Chlormethan, Dichlormethan, Trichlormethan, Chlorethan, 1,2-Dichlorethan und 1,1,1-Trichlorethan und 1-Chlorbutan, sowie halogenierte aromatische Kohlenwasserstoffe wie Chlorbenzol und Fluorbenzol. Die als Lösungsmittel verwendeten halogenierten Kohlenwasserstoffe umfassen keine Verbindungen, worin Halogenatome an sekundären oder tertiären Kohlenstoffatomen sitzen.

Besonders bevorzugte Lösungsmittel sind aromatische Kohlenwasserstoffe, wovon Toluol besonders bevorzugt ist. Ebenfalls bevorzugt sind Lösungsmittelgemische, die wenigstens einen halogenierten Kohlenwasserstoff und wenigstens einen aliphatischen oder aromatischen Kohlenwasserstoff umfassen. Insbesondere umfasst das Lösungsmittelgemisch Hexan und Chlormethan und/oder Dichlormethan. Das Volumenverhältnis von Kohlenwasserstoff zu halogeniertem Kohlenwasserstoff liegt dabei vorzugsweise im Bereich von 1:10 bis 10:1, besonders bevorzugt im Bereich von 4:1 bis 1:4 und insbesondere im Bereich von 2:1 bis 1:2.

In der Regel wird man das erfindungsgemäße Verfahren bei Temperaturen unterhalb 0°C, z.B. im Bereich von 0 bis -140°C, vorzugsweise im Bereich von -30 bis -120°C, und besonders bevorzugt im Bereich von -40 bis -110°C durchführen. Der Reaktionsdruck ist von untergeordneter Bedeutung.

Die Abführung der Reaktionswärme erfolgt in üblicher Weise, beispielsweise durch Wandkühlung und/oder unter Ausnutzung einer Siedekühlung.

Zum Reaktionsabbruch werden die lebenden distalen Kettenenden desaktiviert, beispielsweise durch Zugabe einer protischen Verbindung, insbesondere durch Zugabe von Wasser, Alkoholen wie Methanol, Ethanol, n-Propanol, Isopropanol, n-Butanol, Isobutanol, sec-Butanol oder tert-Butanol, oder deren Mischungen mit Wasser.

Durch das erfindungsgemäße Verfahren erhält man telechele (bifunktionelle) Polyisobutene, die zum einen eine ethylenisch ungesättigte Gruppe am Kettenanfang aufweisen, die durch den Rest A der Initiator-Verbindung der Formel I eingeführt wird, und zum anderen einen Terminus (distales Kettenende, d.h. dem Kettenanfang entgegengesetztes Kettenende) mit einer funktionellen Gruppe enthalten. Bei dieser funktionellen Gruppe handelt es sich vorzugsweise um eine Gruppe -CH₂-C(CH₃)₂-Halogen. Diese wird meist beim Reaktionssabbruch mit einem protischen Desaktivierungsmittel gebildet. Das Halogenatom in dieser terminalen Gruppe stammt in der Regel von der zur Polymerisation eingesetzten Lewis-Säure. Vorzugsweise steht Halogen für Chlor. Diese telechelen Polyisobutene sind wertvolle Zwischenprodukte für die Herstellung weiterer bifunktioneller Polyisobuten-Derivate. Als Beispiele für die Derivatisierung seien die Alkylierung von Phenolen und die Eliminierung von Halogenwasserstoff aus der Gruppe -CH₂-C(CH₃)₂-Halogen unter Bildung einer ethylenisch ungesättigten terminalen Gruppe genannt.

Die Überführung der terminalen Gruppe -CH₂-C(CH₃)₂-Halogen in einen ethylenisch ungesättigten Rest (Methyliden-Doppelbindung) kann beispielsweise thermisch, z. B. durch Erwärmen auf eine Temperatur von 70 bis 200°C, oder durch Behandlung mit einer Base erfolgen. Geeignete Basen sind z.B. Alkalimetallalkoxide, wie Natriummethanolat, Natriumethanolat und Kalium-tert-Butanolat, basisches Aluminiumoxid, Alkalimetallhydroxide, wie Natriumhydroxid, und tertiäre Amine, wie Pyridin oder Tributylamin, vgl. Kennedy et al., Polymer Bulletin 1985, 13, 435-439. Bevorzugt wird Natriumethanolat verwendet.

Es ist jedoch auch möglich, am Kettenende ethylenisch terminierte Polyisobutene zu erhalten, ohne zuvor de Gruppe -CH₂-C(CH₃)₂-Halogen einzuführen. Hierzu setzt man geeigneterweise das lebende Kettenende des lsobutenpolymers mit einem Terminierungsreagenz um, welches an das Kettenende eine ethylenisch ungesättigte Gruppe anfügt.

Geeignete Terminierungsreagenzien sind beispielsweise Trialkylallylsilanverbindungen, z.B. Trimethylallylsilan. Das lebende Kettenende wird dabei durch Zugabe einer Trialkylallylsilanverbindung terminiert. Die Verwendung der Allylsilane führt zum Abbruch der Polymerisation unter Einführung eines Allylrestes am Polymerkettenende, vgl. EP 264 214.

Ein anderes Beispiel für ein Terminierungsreagenz ist 1,1-Diphenylethylen. Das lebende Kettenende wird dabei durch Zugabe von 1,1-Diphenylethylen und einer Base terminiert, wodurch eine diphenylsubstituierte Doppelbindung am Kettenende eingeführt wird, vgl. J. Feldthusen, B. Iván, A. H. E. Müller und J. Kops, Macromol. Rep. 1995, A32, 639, J. Feldthusen, B. Iván und A. H. E. Müller, Macromolecules 1997, 30, 6989 und Macromolecules 1998, 31, 578, DE-A 19648028 und DE-A 19610350.

Ferner sind konjugierte Diene, z.B. Butadien, als Terminierungsreagenzien geeignet. Hierbei wird das reaktive Kettenende mit dem konjugierten Dien umgesetzt und anschließend wie zuvor beschrieben desaktiviert, vgl. DE-A 40 25 961.

Außerdem sind mit dem erfindungsgemäßen Verfahren telechele Polyisobutene erhältlich, die an sämtlichen Kettenenden eine ethylenisch ungesättigte Gruppe aufweisen, die sich vom Rest A der Verbindung I ableiten. Hierzu werden durch Zusatz eines Kopplungsmittels zwei oder mehrere lebende Polymerketten gekoppelt. "Kopplung" bedeutet die Ausbildung von chemischen Bindungen zwischen den reaktiven Kettenenden, so dass zwei oder mehrere Polymerketten zu einem Molekül verbunden werden. Die durch Kopplung erhaltenen Moleküle sind symmetrische telechele oder sternförmige Moleküle mit ethylenisch ungesättigten Gruppen A an den Molekülenden bzw. den Enden der Äste des sternförmigen Moleküls. Auf diese Weise lassen sich auch durch Kopplung von lebenden Copolymeren des Typs AB⁺ Triblockcopolymere des Typs AB-BA herstellen, worin A für einen Polyisobutenblock und B für einen davon verschiedenen Polymerblock, z.B. einen Polyvinylaromatenblock, steht.

Geeignete Kopplungsmittel weisen beispielsweise wenigstens zwei allylständig zur gleichen oder verschiedenen Doppelbindungen angeordnete elektrofuge Austrittsgruppen, z.B. Trialkylsilylgruppen, auf, so dass sich das kationische Zentrum eines reaktiven Kettenendes in einer konzertierten Reaktion unter Abspaltung der Austrittsgruppe und Verschiebung der Doppelbindung anlagern kann. Andere Kopplungsmittel weisen wenigstens ein konjugiertes System auf, an das sich das kationische Zentrum eines reaktiven Kettenendes unter Ausbildung eines stabilisierten Kations elektrophil addieren kann. Durch Abspaltung einer Austrittsgruppe, z.B. eines Protons, entsteht dann unter Rückbildung des konjugierten Systems_eine stabile s-Bindung zu der Polymerkette. Mehrere dieser konjugierten Systeme können durch inerte Spacer miteinander verbunden sein.

Zu den geeigneten Kopplungsmitteln zählen:
(i) Verbindungen, die wenigstens zwei 5-gliedrige Heterocyclen mit einem unter Sauerstoff, Schwefel und Stickstoff ausgewählten Heteroatom aufweisen, z.B. organische Verbindungen, die wenigstens zwei Furanringe aufweisen, wie 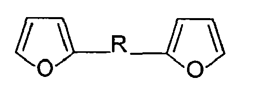 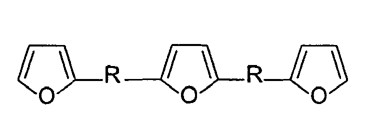 worin R für C₁-C₁₀-Alkylen steht, vorzugsweise Methylen oder 2,2-Propandiyl;
(ii) Verbindungen mit wenigstens zwei allylständigen Trialkylsilylgruppen, wie 1,1-Bis(trialkylsilylmethyl)ethylene, z.B. 1,1-Bis(trimethylsilylmethyl)ethylen,
   Bis[(trialkylsilyl)-propenyl]benzole z.B. 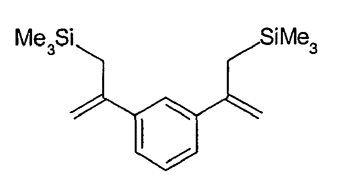 (worin Me für Methyl steht),
(iii) Verbindungen mit wenigstens zwei konjugiert zu jeweils zwei aromatischen Ringen angeordneten Vinylidengruppen, wie Bis-diphenylethylene z.B.

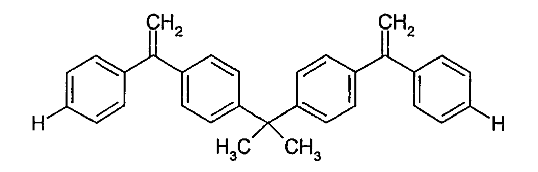

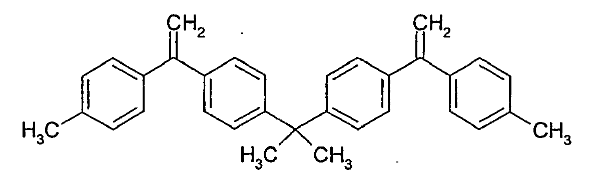

Eine Beschreibung geeigneter Kopplungsmittel findet sich in folgenden Literaturstellen; die Kopplungsreaktion kann in analoger Weise zu den dort beschriebenen Umsetzungen durchgeführt werden: R. Faust, S. Hadjikyriacou, Macromolecules 2000, 33, 730-733; R. Faust, S. Hadjikyriacou, Macromolecules 1999, 32, 6393-6399; R. Faust, S. Hadjikyriacou, Polym. Bull. 1999, 43, 121-128; R. Faust, Y. Bae, Macromolecules 1997, 30, 198; R. Faust, Y. Bae, Macromolecules 1998, 31, 2480; R. Storey, Maggio, Polymer Preprints 1998, 39, 327-328; WO99/24480; US 5,690,861 und US 5,981,785.

Die Kopplung erfolgt in der Regel in Gegenwart einer Lewis-Säure, wobei sich solche Lewis-Säuren eignen, die auch zur Durchführung der eigentlichen Polymerisationsreaktion verwendbar sind. Zur Durchführung der Kopplungsreaktion sind außerdem auch die gleichen Lösungsmittel und Temperaturen geeignet, wie man sie zur Durchführung der eigentlichen Polymerisationsreaktion einsetzt. Zweckmäßigerweise kann man die Kopplung daher als Eintopfreaktion im Anschluß an die Polymerisationsreaktion im gleichen Lösungsmittel in Gegenwart der zur Polymerisation eingesetzten Lewis-Säure durchführen. Üblicherweise verwendet man eine molare Menge des Kopplungsmittels, die etwa dem Quotienten der zur Polymerisation verwendeten molaren Menge des Initiators der Formel I, dividiert durch die Zahl der Kopplungsstellen des Kopplungsmittels, entspricht.

Nach der Terminierung (Desaktivierung und/oder Einführung einer ethylenisch ungesättigten terminalen Gruppe) oder Kopplung wird in der Regel das Lösungsmittel in geeigneten Aggregaten wie Rotations-, Fallfilm- oder Dünnschichtverdampfern oder durch Entspannung der Reaktionslösung entfernt.

Die nach dem erfindungsgemäßen Verfahren hergestellten Isobuten-Polymere weisen eine enge Molekulargewichtsverteilung auf. Der Polydispersitätsindex PDI = M_{w}/Mₙ liegt dabei vorzugsweise unterhalb von 1,60, besonders bevorzugt unterhalb von 1,40 und insbesondere unterhalb von 1,35.

Vorzugsweise wird das erfindungsgemäße Verfahren zur Herstellung von Polyisobutenen mit einem zahlenmittleren Molekulargewicht Mₙ von 200 bis 100000, besonders bevorzugt von 400 bis 50000 und insbesondere von 500 bis 15000 eingesetzt.

Die erfindungsgemäß hergestellten Isobuten-Polymere sind an einem Kettenende (Kettenanfang) durch die ethylenisch ungesättigte Gruppe A des Initiators der Formel I terminiert. Bei der entgegengesetzten (distalen) Endgruppe handelt es sich vorzugsweise um eine Gruppe -CH₂-C(CH₃)₂-Halogen, besonders bevorzugt um -CH₂-C(CH₃)₂-Cl. Alternativ handelt es sich bei der entgegengesetzten Gruppe vorzugsweise um eine ethylenisch ungesättigte Gruppe, die wie oben beschrieben thermisch oder durch Umsetzung des Halogen-substituierten Kettenendes mit einer geeigneten Base oder durch Umsetzung der bei der Polymerisation gebildeten lebenden Polyisobutenketten mit einer Trialkylallylsilanverbindung, mit 1,1-Diphenylethylen oder einem konjugierten Dien erhältlich ist. Außerdem sind mit dem erfindungsgemäßen Verfahren durch Kopplung der lebenden Polyisobutenketten auch Polyisobutene erhältlich, die an allen Kettenenden durch die ethylenisch ungesättigte Gruppe A des Initiators der Formel I terminiert sind

Ein weiterer Gegenstand der vorliegenden Erfindung ist ein Polyisobuten, das an wenigstens einem Molekülende durch eine Gruppe der Formel II terminiert ist, 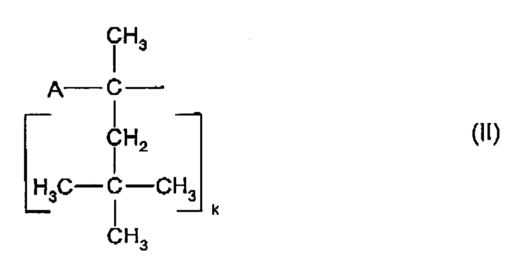 worin A für eine Gruppe der Formel A.3.1 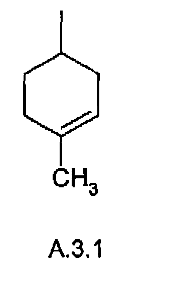 steht und k wie vorstehend definiert ist,
oder ein Funktionalisierungsprodukt davon, das durch
i) Hydrosilylierung,
ii) Hydrosulforierung,
iii) elektrophile Substitution an Aromaten,
iv) Epoxidierung und ggf. Umsetzung mit Nucleophilen,
v) Hydroborierung und ggf. oxidative Spaltung,
vi) Umsetzung mit einem Enophil in einer En-Reaktion,
vii) Addition von Halogenen oder Halogenwasserstoffen oder
viii) Hydroformylierung
erhältlich ist.

Die beschriebenen Funktionalisierungsreaktionen können außer an der terminierenden Gruppe II auch an einer ungesättigten Gruppe am entgegengesetzten Kettenende erfolgen.

### i) Hydrosilylierung

Zur Funktionalisierung kann ein gemäß dem erfindungsgemäßen Verfahren hergestelltes Polyisobuten einer Umsetzung mit einem Silan in Gegenwart eines Silylierungskatalysators unter Erhalt eines wenigstens teilweise mit Silylgruppen funktionalisierten Polyisobutens unterworfen werden.

Geeignete Hydrosilylierungskatalysatoren sind z.B. Übergangsmetallkatalysatoren, wobei das Übergangsmetall vorzugsweise ausgewählt ist unter Pt, Pd, Rh, Ru und Ir. Zu den geeigneten Platinkatalysatoren zählt beispielsweise Platin in feinverteilter Form ("Platinmohr"), Platinchlorid und Platinkomplexe wie Hexachloroplatinsäure oder Divinyldisiloxan-Platin-Komplexe, z.B. Tetramethyldivinyldisiloxan-Platin-Komplexe. Geeignete Rhodiumkatalysatoren sind beispielsweise (RhCl(P(C₆H₅)₃)₃) und RhCl₃. Geeignet sind weiterhin RuCl₃ und IrCl₃. Geeignete Katalysatoren sind weiterhin Lewis-Säuren wie AlCl₃ oder TiCl₄ sowie Peroxide. Dabei kann es von Vorteil sein, Kombinationen oder Gemische der zuvor genannten Katalysatoren einzusetzen.

Geeignete Silane sind z.B. halogenierte Silane, wie Trichlorsilan, Methyldichlorsilan, Dimethylchlorsilan und Trimethylsiloxydichlorsilan; Alkoxysilane, wie Methyldimethoxysilan, Phenyldimethoxysilan, 1,3,3,5,5,7,7-Heptamethyl-1,1-dimethoxytetrasiloxan und Trialkoxysilane, z. B. Trimethoxysilan und Triethoxysilan, sowie Acyloxysilane. Bevorzugt verwendet man Trialkoxysilane.

Die Reaktionstemperatur bei der Silylierung liegt vorzugsweise in einem Bereich von 0 bis 140°C, besonders bevorzugt 40 bis 120°C. Die Reaktion wird üblicherweise unter Normaldruck durchgeführt, kann jedoch auch bei erhöhten Drücken, wie z.B. im Bereich von etwa 1,5 bis 20 bar, oder verringerten Drücken, wie z.B. 200 bis 600 mbar, erfolgen.

Die Reaktion kann ohne Lösungsmittel oder in Gegenwart eines geeigneten Lösungsmittels erfolgen. Als Lösungsmittel bevorzugt sind beispielsweise Toluol, Tetrahydrofuran und Chloroform.

### ii) Hydrosulfurierung

Zur Funktionalisierung kann ein gemäß dem erfindungsgemäßen Verfahren hergestelltes Polyisobuten einer Umsetzung mit Schwefelwasserstoff oder einem Thiol, wie Alkyl- oder Arylthiole, Hydroxymercaptane, Aminomercaptane, Thiocarbonsäuren oder Silanthiole, unter Erhalt eines wenigstens teilweise mit Thiogruppen funktionalisierten Polyisobutens unterzogen werden. Geeignete Hydro-Alkylthio-Additionen sind in J. March, Advanced Organic Chemistry, 4. Auflage, Verlag John Wiley & Sons, S. 766-767 beschrieben, worauf hier in vollem Umfang Bezug genommen wird. Die Umsetzung kann in der Regel sowohl in Abwesenheit als auch in Anwesenheit von Initiatoren sowie in Anwesenheit von elektromagnetischer Strahlung erfolgen. Bei der Addition von Schwefelwasserstoff werden mit Thiolgruppen funktionalisierte Polyisobutene erhalten. Die Addition von Schwefelwasserstoff erfolgt bevorzugt bei Temperaturen unterhalb von 100°C und einem Druck von 1 bis 50 bar, besonders bevorzugt von etwa 10 bar. Außerdem erfolgt die Addition vorzugsweise in Gegenwart eines Kationenaustauscherharzes, wie Amberlyst 15. Bei der Umsetzung mit Thiolen in Abwesenheit von Initiatoren werden in der Regel die Markovnikov-Additionsprodukte an die Doppelbindung erhalten. Geeignete Initiatoren der Hydro-Alkylthio-Addition sind beispielsweise Protonen- und Lewis-Säuren, wie konzentrierte Schwefelsäure oder AlCl₃, und saure Kationenaustauscher, wie Amberlyst 15. Geeignete Initiatoren sind weiterhin solche, die zur Ausbildung von freien Radikalen befähigt sind, wie Peroxide oder Azoverbindungen. Bei der Hydro-Alkylthio-Addition in Gegenwart dieser Initiatoren werden in der Regel die Anti-Markovnikov-Additionsprodukte erhalten. Die Reaktion kann weiterhin in Gegenwart von elektromagnetischer Strahlung einer Wellenlänge von 400 bis 10 nm, bevorzugt 200 bis 300 nm, erfolgen.

### iii) Elektrophile Substitution an Aromaten

Zur Derivatisierung kann ein gemäß dem erfindungsgemäßen Verfahren hergestelltes Polyisobuten mit einer Verbindung, die wenigstens eine aromatische oder heteroaromatische Gruppe aufweist, in Gegenwart eines Alkylierungskatalysators umgesetzt werden. Geeignete aromatische und heteroaromatische Verbindungen, Katalysatoren und Reaktionsbedingungen dieser sogenannten Friedel-Crafts-Alkylierung sind beispielsweise in J. March, Advanced Organic Chemistry, 4. Auflage, Verlag John Wiley & Sons, S. 534-539 beschrieben, worauf hier Bezug genommen wird.

Vorzugsweise wird zur Alkylierung eine aktivierte aromatische Verbindung eingesetzt. Geeignete aromatische Verbindungen sind beispielsweise Alkylaromaten, Alkoxyaromaten, Hydroxyaromaten oder aktivierte Heteroaromaten, wie Thiophene oder Furane.

Die zur Alkylierung eingesetzte aromatische Hydroxyverbindung ist vorzugsweise ausgewählt unter phenolischen Verbindungen mit 1, 2 oder 3 OH-Gruppen, die gegebenenfalls wenigstens einen weiteren Substituenten aufweisen können. Bevorzugte weitere Substituenten sind C₁-C₈-Alkylgruppen und insbesondere Methyl und Ethyl. Bevorzugt sind insbesondere Verbindungen der allgemeinen Formel, 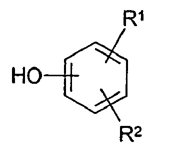 worin R¹ und R² unabhängig voneinander für Wasserstoff, OH oder CH₃ stehen. Besonders bevorzugt sind Phenol, die Kresol-Isomere, Katechol, Resorcinol, Pyrogallol, Fluoroglucinol und die Xylenol-Isomere. Insbesondere werden Phenol, o-Kresol und p-Kresol eingesetzt. Gewünschtenfalls können auch Gemische der zuvor genannten Verbindungen zur Alkylierung eingesetzt werden.

Geeignet sind auch Polyaromaten, wie Polystyrol, Polyphenylenoxid oder Polyphenylensulfid, oder Copolymere von Aromaten beispielsweise mit Butadien, Isopren, (meth)Acrylsäurederivaten, Ethylen oder Propylen.

Der Katalysator ist vorzugsweise ausgewählt unter Lewis-sauren Alkylierungskatalysatoren, worunter im Rahmen der vorliegenden Anmeldung sowohl einzelne Akzeptoratome als auch Akzeptor-Ligand-Komplexe, Moleküle, etc. verstanden werden, sofern diese insgesamt (nach außen) Lewis-saure (Elektronenakzeptor-)Eigenschaften aufweisen. Dazu zählen beispielsweise AlCl₃, AlBr₃, BF₃, BF₃2 C₆H₅OH, BF₃[O(C₂H₅)₂]₂, TiCl₄, SnCl₄, AlC₂H₅Cl₂, FeCl₃, SbCl₅ und SbF₅. Diese Alkylierungskatalysatoren können gemeinsam mit einem Cokatalysator, beispielsweise einem Ether, eingesetzt werden. Geeignete Ether sind Di-(C₁-C₈-)alkylether, wie Dimethylether, Diethylether, Di-n-propylether, sowie Tetrahydrofuran, Di-(C₅-C₈-)cycloalkylether, wie Dicyclohexylether und Ether mit mindestens einem aromatischen Kohlenwasserstoffrest, wie Anisol. Wird zur Friedel-Crafts-Alkylierung ein Katalysator-Cokatalysator-Komplex eingesetzt, so liegt das Molmengenverhältnis von Katalysator zu Cokatalysator vorzugsweise in einem Bereich von 1:10 bis 10:1. Die Reaktion kann auch mit Protonensäuren wie Schwefelsäure, Phosphorsäure, Trifluormethansulfonsäure katalysiert werden. Organische Protonensäuren können auch in polymer gebundener Form vorliegen, beispielsweise als lonenaustauscherharz. Geeignet sind auch Zeolithe sowie anorganische Polysäuren.

Die Alkylierung kann lösungsmittelfrei oder in einem Lösungsmittel durchgeführt werden. Geeignete Lösungsmittel sind beispielsweise n-Alkane und deren Gemische und Alkylaromaten, wie Toluol, Ethylbenzol und Xylol sowie halogenierte Abkömmlinge davon.

Die Alkylierung wird bevorzugt bei Temperaturen zwischen -10°C und +100°C durchgeführt. Die Reaktion wird üblicherweise bei Atmosphärendruck durchgeführt, kann aber auch bei höheren oder geringeren Drücken durchgeführt werden.

Durch geeignete Wahl der Molmengenverhältnisse von aromatischer oder heteroaromatischer Verbindung zu Polyisobuten und des Katalysators kann der erzielte Anteil an alkylierten Produkten und deren Alkylierungsgrad eingestellt werden. Im Wesentlichen monoalkylierte Polyisobutenylphenole werden im Allgemeinen mit einem Überschuss an Phenol oder in Gegenwart eines Lewis-sauren Alkylierungskatalysators erhalten, wenn zusätzlich ein Ether als Cokatalysator eingesetzt wird.

Zur weiteren Funktionalisierung kann man das erhaltene Polyisobutenylphenol einer Umsetzung im Sinne einer Mannichreaktion mit wenigstens einem Aldehyd, beispielsweise Formaldehyd, und wenigstens einem Amin, das wenigstens eine primäre oder sekundäre Aminfunktion aufweist, unterziehen, wobei man eine mit Polyisobuten alkylierte und zusätzlich wenigstens teilweise aminoalkylierte Verbindung erhält. Es können auch Reaktions- und/oder Kondensationsprodukte von Aldehyd und/oder Amin eingesetzt werden. Die Herstellung solcher Verbindungen sind in WO 01/25 293 und WO 01/25 294 beschrieben, auf die hiermit im vollen Umfang Bezug genommen wird.

### iv) Epoxidierung

Zur Funktionalisierung kann ein gemäß dem erfindungsgemäßen Verfahren hergestelltes Polyisobuten mit wenigstens einer Peroxidverbindung unter Erhalt eines wenigstens teilweise epoxidierten Polyisobutens umgesetzt werden. Geeignete Verfahren zur Epoxidierung sind in J. March, Advanced Organic Chemistry, 4. Auflage, Verlag John Wiley & Sons, S. 826-829 beschrieben, worauf hier Bezug genommen wird. Vorzugsweise wird als Peroxidverbindung wenigstens eine Persäure, wie m-Chlorperbenzoesäure, Perameisensäure, Peressigsäure, Trifluorperessigsäure, Perbenzoesäure und 3,5-Dinitroperbenzoesäure eingesetzt. Die Herstellung der Persäuren kann in situ aus den entsprechenden Säuren und H₂O₂ gegebenenfalls in Gegenwart von Mineralsäuren erfolgen. Weitere geeignete Epoxidierungsreagenzien sind beispielsweise alkalisches Wasserstoffperoxid, molekularer Sauerstoff und Alkylperoxide, wie tert.-Butylhydroperoxid. Geeignete Lösungsmittel für die Epoxidierung sind beispielsweise übliche, nicht polare Lösungsmittel. Besonders geeignete Lösungsmittel sind Kohlenwasserstoffe wie Toluol, Xylol, Hexan oder Heptan. Das gebildete Epoxid kann anschließend ringöffnend mit Wasser, Säuren, Alkoholen, Thiolen oder primären oder sekundären Aminen umgesetzt werden, wobei man u.a. Diole, Glycolether, Glycolthioether und Amine erhält.

### v) Hydroborierung

Zur Funktionalisierung kann man ein gemäß dem erfindungsgemäßen Verfahren hergestelltes Polyisobuten einer Umsetzung mit einem (gegebenenfalls in situ erzeugten) Boran unterziehen, wobei ein wenigstens teilweise hydroxyliertes Polyisobuten erhalten wird. Geeignete Verfahren zur Hydroborierung sind in J. March, Advanced Organic Chemistry, 4. Auflage, Verlag John Wiley & Sons, S. 783-789 beschrieben, worauf hiermit Bezug genommen wird. Geeignete Hydroborierungsreagenzien sind beispielsweise Diboran, das in der Regel in situ durch Umsetzung von Natriumborhydrid mit BF₃-Etherat erzeugt wird, Diisamylboran (Bis-[3-methylbut-2-yl]boran), 1,1,2-Trimethylpropylboran, 9-Borbicyclo[3.3.1]nonan, Diisocamphenylboran, die durch Hydroborierung der entsprechenden Alkene mit Diboran erhältlich sind, Chlorboran-Dimethylsulfid, Alkyldichlorborane oder H₃B-N(C₂H₅)₂.

Üblicherweise führt man die Hydroborierung in einem Lösungsmittel durch. Geeignete Lösungsmittel für die Hydroborierung sind beispielsweise acyclische Ether wie Diethylether, Methyl-tert.-butylether, Dimethoxyethan, Diethylenglykoldimethylether, Triethylenglykoldimethylether, cyclische Ether wie Tetrahydrofuran oder Dioxan sowie Kohlenwasserstoffe wie Hexan oder Toluol oder Gemische davon. Die Reaktionstemperatur wird in der Regel von der Reaktivität des Hydroborierungsmittels bestimmt und liegt normalerweise zwischen dem Schmelz- und Siedepunkt des Reaktionsgemisches, vorzugsweise im Bereich von 0°C bis 60°C.

Üblicherweise setzt man das Hydroborierungsmittel im Überschuss bezogen auf das Alken ein. Das Boratom addiert sich vorzugsweise an das weniger substituierte und somit sterisch weniger gehinderte Kohlenstoffatom.

Üblicherweise werden die gebildeten Alkylborane nicht isoliert, sondern durch nachfolgende Umsetzung direkt in die Wertprodukte überführt. Eine sehr bedeutsame Umsetzung der Alkylborane ist die Reaktion mit alkalischen Wasserstoffperoxid unter Erhalt eines Alkohols, der vorzugsweise formal der Anti-Markovnikov-Hydratisierung des Alkens entspricht. Des Weiteren können die erhaltenen Alkylborane einer Umsetzung mit Brom in Gegenwart von Hydroxid-lonen unter Erhalt des Bromids unterzogen werden.

### vi) En-Reaktion

Zur Funktionalisierung kann ein gemäß dem erfindungsgemäßen Verfahren hergestelltes Polyisobuten mit wenigstens einem Alken, das eine elektrophil-substituierte Doppelbindung aufweist, in einer En-Reaktion umgesetzt werden (siehe z.B. DE-A 4 319 672 oder H. Mach und P. Rath in "Lubrication Science II (1999), S. 175-185, worauf vollinhaltlich Bezug genommen wird). Bei der En-Reaktion wird ein als En bezeichnetes Alken mit einem Allyl-ständigen Wasserstoffatom mit einem elektrophilen Alken, dem sogenannten Enophil, in einer pericyclischen Reaktion, umfassend eine Kohlenstoff-Kohlenstoff-Bindungsknüpfung, eine Doppelbindungsverschiebung und einen Wasserstofftransfer umgesetzt. Vorliegend reagiert das Polyisobuten als En. Geeignete Enophile sind Verbindungen, wie sie auch als Dienophile in der Diels-Alder-Reaktion eingesetzt werden. Bevorzugt wird als Enophil Maleinsäureanhydrid eingesetzt. Dabei resultieren wenigstens teilweise mit Bernsteinsäureanhydridgruppen (Succinanhydridgruppen) funktionalisierte Polyisobutene.

Die En-Reaktion kann gegebenenfalls in Gegenwart einer Lewis-Säure als Katalysator durchgeführt werden. Geeignet sind beispielsweise Aluminiumchlorid und Ethylaluminiumchlorid.

Zur weiteren Funktionalisierung kann man beispielsweise ein mit Bernsteinsäureanhydridgruppen derivatisiertes Polyisobuten einer Folgereaktion unterziehen, die ausgewählt ist unter:
a) Umsetzung mit wenigstens einem Amin unter Erhalt eines wenigstens teilweise mit Succinimidgruppen und/oder Succinamidgruppen funktionalisierten Polyisobutens,
b) Umsetzung mit wenigstens einem Alkohol unter Erhalt eines wenigstens teilweise mit Succinestergruppen funktionalisierten Polyisobutens, und
g) Umsetzung mit wenigstens einem Thiol unter Erhalt eines wenigstens teilweise mit Succinthioestergruppen funktionalisierten Polyisobutens.

### vii) Addition von Halogen oder Halogenwasserstoffen

Zur Funktionalisierung kann ein gemäß dem erfindungsgemäßen Verfahren hergestelltes Polyisobuten einer Umsetzung mit Halogenwasserstoff oder einem Halogen unter Erhalt eines wenigstens teilweise mit Halogengruppen funktionalisierten Polyisobutens unterzogen werden. Geeignete Reaktionsbedingungen der Hydro-Halo-Addition werden in J. March, Advanced Organic Chemistry, 4. Auflage, Verlag John Wiley & Sons, S. 758-759 beschrieben, worauf hier Bezug genommen wird. Zur Addition von Halogenwasserstoff eignen sich prinzipiell HF, HCl, HBr und HI. Die Addition von HI, HBr und HF kann in der Regel bei Raumtemperatur erfolgen, wohingegen zur Addition von HCl in der Regel erhöhte Temperaturen eingesetzt werden.

Die Addition von Halogenwasserstoffen kann prinzipiell in Abwesenheit oder in Anwesenheit von Initiatoren oder von elektromagnetischer Strahlung erfolgen. Bei der Addition in Abwesenheit von Initiatoren, speziell von Peroxiden, werden in der Regel die Markovnikov-Additionsprodukte erhalten. Unter Zusatz von Peroxiden führt die Addition von HBr in der Regel zu Anti-Markovnikov-Produkten.

Die Halogenierung von Doppelbindungen wird in J. March, Advanced Organic Chemistry, 4. Auflage, Verlag John Wiley & Sons, S. 812-814 beschrieben, worauf hier Bezug genommen wird. Zur Addition von Cl, Br und I können die freien Halogene eingesetzt werden. Zum Erhalt von gemischt-halogenierten Verbindungen ist der Einsatz von Interhalogen-Verbindungen bekannt. Zur Addition von Fluor werden in der Regel fluorhaltige Verbindungen, wie CoF₃, XeF₂ und Mischungen von PbO₂ und SF₄ eingesetzt. Brom addiert in der Regel bei Raumtemperatur in guten Ausbeuten an Doppelbindungen. Zur Addition von Chlor können neben dem freien Halogen auch chlorhaltige Reagenzien, wie SO₂Cl₂, PCl₅ etc. eingesetzt werden.

Wird zur Halogenierung Chlor oder Brom in Gegenwart von elektromagnetischer Strahlung eingesetzt, so erhält man im Wesentlichen die Produkte der radikalischen Substitution an der Polymerkette und nicht oder nur in untergeordnetem Maß Additionsprodukte an die endständige Doppelbindung.

Bevorzugte Funktionalisierungsprodukte sind die Bisepoxide, Dithiole, Diole (Antimarkovnikov-Produkte wie sie z.B. aus der Hydroborierung erhältlich sind und Markovnikov-Produkte, wie sie z.B. aus der Epoxidierung und anschließende Umsetzung des Epoxids mit Wasser und gegebenenfalls einer Säure erhältlich sind) und Bis(trialkoxysilane).

Bestimmte durch das erfindungsgemäße Verfahren erhältliche Polyisobutene, die an einem Kettenende durch eine Gruppe der Formel II terminiert sind und am entgegengesetzten Kettenende eine davon verschiedene, zuvor beschriebene, terminierende Gruppe aufweisen, können aufgrund der unterschiedlichen Reaktivitäten der terminierenden Gruppen unterschiedlich funktionalisiert werden. Dies ist insbesondere für die Verwendung des Polyisobutens in Kraft- und Schmierstoffen von Vorteil, da hier hydrophile und hydrophobe Eigenschaften zusammentreffen müssen. Weiterhin ist die einfache Zugänglichkeit der Verbindung der Formel I von Vorteil. Da mit der Verbindung der Formel I nur eine einseitig wachsende Kette initiiert wird, verringert sich die benötigte Menge an Lewis-Säure und Terminierungsreagenz im Vergleich zu polyfunktionellen Initiatoren. Außerdem unterliegt die aus dem Initiator stammende terminierende Gruppe nicht den eingangs genannten Nebenreaktionen, die bei Verwendung von polyfunktionellen aromatischen Initiatoren des Standes der Technik auftreten.

Die folgenden Beispiele sollen die Erfindung näher veranschaulichen.

### Beispiele (außerhalb der Erfindung)

### 1. Herstellung des Starters 2-Chlor-2-methylbut-3-en

In einem 0,5 I Vierhalskolben wurden 300 ml Isopren und 30 ml Diethylether vorgelegt. Dann leitet man 110 g Chlorwasserstoff bei -20 °C ein und rührte das Gemisch 1,5 Stunden bei -5 °C. Durch Einblasen von Stickstoff wurde anschließend nicht umgesetzter Chlorwasserstoff entfernt. Nach Extraktion des Reaktionsgemischs mit 200 ml Wasser in einem Scheidetrichter wurde die organische Phase abgetrennt, über Natriumsulfat getrocknet und filtriert. Anschließend wurde das Filtrat destillativ bei 40 °C und 300 mbar vom Lösungsmittel und nicht umgesetztem Isopren befreit. Man erhielt 281,6 g eines Gemischs aus 70 % 2-Chlor-2-methylbut-3-en und 30 % 4-Chlor-2-methylbut-2-en, aus welchem man durch Destillation über eine 50 cm Destillationskolonne mit 4 mm Maschendrahtwendeln die Titelverbindung isolierte.
Siedepunkt: 38-45 °C (285 mbar)
¹H-NMR (CDCl₃; 500 MHz): 6,95 (dd, 1 H); 5,23 (d,1 H); 5,03 (d, 1 H); 1,69 (s, 6H).

### 2. Polymerisation von Isobuten

Eine Apparatur aus einem 1 I Vierhalskolben mit Tropftrichter, Trockeneiskühler, Thermometer, Septum und Magnetrührer (Reaktionskolben) mit einer direkten Verbindung zu einem 1 I Kondensationskolben mit graduiertem Tropftrichter mit Trockeneiskühlung wurde durch zweimaliges Evakuieren und Belüften mit wasserfreiem Stickstoff inertisiert. In den mit Aceton/Trockeneis auf -20 °C gekühlten Kondensationskolben wurden 300 ml trockenes Hexan (Trocknung mit Molsieb 3A bei -78 °C), 250 ml Isobuten (bei -78 °C kondensiert und über Aluminiumoxid vorgereinigt) und 300 ml Methylenchlorid gegeben. Anschließend gab man 50-100 mg Phenanthrolin zu und titrierte mit 1,6 M n-Butyllithium in Hexan bis zum Farbumschlag nach rotbraun (ca. 5 ml). Das Trockeneisbad wurde durch ein Wasserbad ersetzt und das Reaktionsgemisch wurde in den mit Trockeneis gekühlten Reaktionskolben destilliert. Bei einer Temperatur von -70 °C fügte man dann nacheinander 2,38 g (9,9 mmol) Phenyltriethoxysilan, 8,6 g (82,7 mmol) 2-Chlor-2-methylbut-3-en und 8,17 g (43,0 mmol) Titantetrachlorid über das Septum hinzu. Das Reaktionsgemisch wurde 2 Stunden bei einer Temperatur von -55 bis -60°C gerührt und anschließend durch Zugabe von 20 ml auf -50°C vorgekühltem Ethanol desaktiviert. Das entstandenen Gemisch wurde dreimal mit Wasser gewaschen, über Natriumsulfat getrocknet und filtriert. Das Filtrat wurde schließlich am Rotationsverdampfer bei einer Endtemperatur von 180 °C und einem Enddruck von 3 mbar von den Lösungsmitteln befreit. Man erhielt 111 g Isobuten-Polymer mit einem zahlenmittleren Molekulargewicht Mₙ von 4060 und einem Polydispersitätsindex PDI von 1,27.

## Patentansprüche

1. Verfahren zur Herstellung von bifunktionellen Polyisobutenen, bei dem man Isobuten oder ein Isobuten-haltiges Monomerengemisch in Gegenwart einer Lewis-Säure und einer Verbindung der Formel I 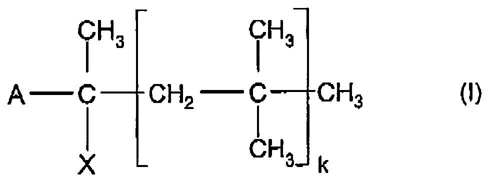 worin
X für Halogen, C₁-C₆-Alkoxy oder C₁-C₆-Acyloxy steht,
A für einen Rest der Formeln A.2 oder A.3 steht 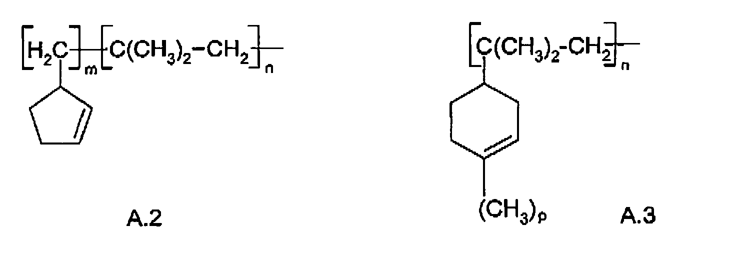
worin
m für 0 oder 1 steht;
n für eine Zahl von 0 bis 3 steht und
p für 0 oder 1 steht, und
k für eine Zahl von 0 bis 5 steht,
polymerisiert.

2. Verfahren nach Anspruch 1, wobei die Verbindung der Formel I ausgewählt ist unter 2-Chlor-2-methyl-3-(cyclopenten-3-yl)proparl, 2-Chlor-2-methyl-4-(cyclohexen-4-yl)pentan und 2-Chlor-2-(1-methylcyclohexen-4-yl)propan.

3. Verfahren nach einem der vorhergehenden Ansprüche, wobei die Lewis-Säure ausgewählt ist unter Titantetrachlorid, Bortrichlorid, Zinntetrachlorid, Aluminiumtrichlorid, Dialkylaluminiumchloriden, Alkylaluminiumdichloriden, Vanadiumpentachlorid, Eisentrichlorid und Bortrifluorid.

4. Verfahren nach einem der vorhergehenden Ansprüche, wobei die Umsetzung außerdem in Gegenwart eines Elektronendonors erfolgt.

5. Verfahren nach Anspruch 4, wobei der Elektronendonor ausgewählt ist unter Pyridinen, Amiden, Lactamen, Ethern, Aminen, Estern, Thioethern, Sulfoxiden, Nitrilen, Phosphinen und nicht polymerisierbaren, aprotischen siliziumorganischen Verbindungen, die wenigstens einen über Sauerstoff gebundenen organischen Rest aufweisen.

6. Verfahren nach einem der vorhergehenden Ansprüche, wobei die Polymerisation durch Zusatz einer protischen Verbindung abgebrochen wird.

7. Verfahren nach Anspruch 6, wobei das nach Abbruch der Polymerisation mit einer protischen Verbindung erhaltene Produkt anschließend thermisch oder mit einer Base behandelt wird.

8. Verfahren nach einem der vorhergehenden Ansprüche, wobei das bei der Polymerisation von Isobuten oder des Isobuten-haltigen Monomerengemischs gebildete lebende Polyisobuten vor Abbruch der Polymerisation mit wenigstens einem Comonomeren umgesetzt wird.

9. Verfahren nach einem der vorhergehenden Ansprüche, wobei das bei der Polymerisation von Isobuten oder des lsobuten-haltigen Monomerengemischs gebildete lebende Polyisobuten vor Abbruch der Polymerisation mit einem konjugierten Dien umgesetzt wird.

10. Verfahren einem der Ansprüche 1 bis 5, wobei das bei der Polymerisation von Isobuten oder des lsobuten-haltigen Monomerengemischs gebildete lebende Polyisobuten mit einer Trialkylallyisilanverbindung oder 1,1-Diphenylethen zusammen mit einer Base umgesetzt wird.

11. Verfahren nach einem der Ansprüche 1 bis 5, wobei das bei der Polymerisation von Isobuten oder des Isobuten-haltigen Monomerengemischs gebildete lebende Polyisobuten mit einem Kopplungsmittel umgesetzt wird, wodurch zwei oder mehrere Polymerketten über ihr distales Ende miteinander verbunden werden.

12. Verfahren nach Anspruch 11, wobei das Kopplungsmittel ausgewählt ist unter
i) Verbindungen, die wenigstens zwei 5-gliedrige Heterocyclen mit einem unter Sauerstoff, Schwefel und Stickstoff ausgewählten Heteroatom aufweisen,
ii) Verbindungen mit wenigstens zwei allylständigen Trialkylsilylgruppen, und
iii) Verbindungen mit wenigstens zwei konjugiert zu jeweils zwei aromatischen Ringen angeordneten Vinylidengruppen.

13. Polyisobuten, an wenigstens einem Molekülende terminiert durch eine Gruppe der Formel II 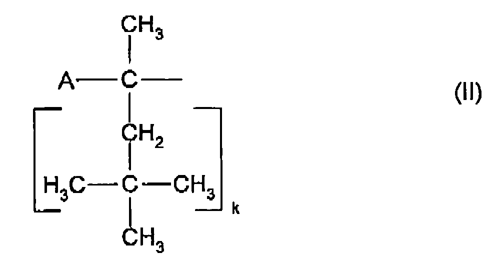 worin A für eine Gruppe der Formel A.3.1 steht 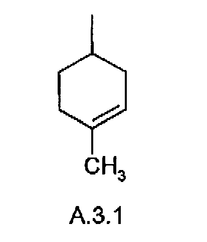 und k wie in Anspruch 1 definiert ist,
oder ein Funktionalisierungsprodukt davon, erhältlich durch
i) Hydrosilylierung,
ii) Hydrosulfurierung,
iii) elektrophile Substitution an Aromaten,
iv) Epoxidierung und gegebenenfalls Umsetzung mit Nucleophilen,
v) Hydroborierung und gegebenenfalls oxidative Spaltung,
vi) Umsetzung mit einem Enophil in einer En-Reaktion,
vii) Addition von Halogenen oder Halogenwasserstoffen oder
viii) Hydroformylierung.

## Claims

1. A process for preparing bifunctional polyisobutenes, which comprises polymerizing isobutene or an isobutene-containing monomer mixture in the presence of a Lewis acid and a compound of the formula I 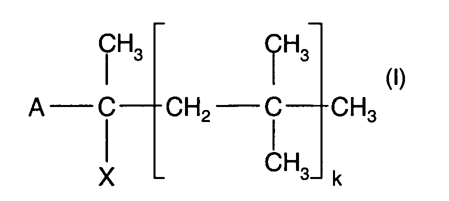 where
X is halogen, C₁-C₆-alkoxy or C₁-C₆-acyloxy,
A is a radical of the formulae A.2 or A.3 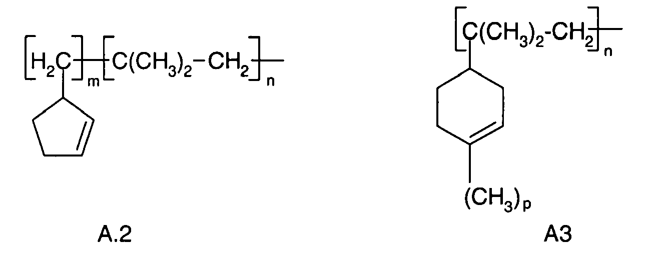
where
m is 0 or 1;
n is from 0 to 3 and
p is 0 or 1 and
k is from 0 to 5.

2. The process according to claim 1, wherein the compound of the formula I is selected from among 2-chloro-2-methyl-3-(cyclopenten-3-yl)propane, 2-chloro-2-methyl-4-(cyclohexen-4-y)pentane and 2-chloro-2-(1-methylcyclohexen-4-yl)propane.

3. The process according to any of the preceding claims, wherein the Lewis acid is selected from among titanium tetrachloride, boron trichloride, tin tetrachloride, aluminum trichloride, dialkylaluminum chlorides, alkylaluminum dichlorides, vanadium pentachloride, iron trichloride and boron trifluoride.

4. The process according to any of the preceding claims, wherein the reaction is additionally carried out in the presence of an electron donor.

5. The process according to claim 4, wherein the electron donor is selected from among pyridines, amides, lactams, ethers, amines, esters, thioethers, sulfoxides, nitriles, phosphines and nonpolymerizable, aprotic organosilicon compounds which bear at least one organic radical bound via oxygen.

6. The process according to any of the preceding claims, wherein the polymerization is stopped by addition of a protic compound.

7. The process according to claim 6, wherein the product obtained by stopping the polymerization by means of a protic compound is subsequently treated thermally or with a base.

8. The process according to any of the preceding claims, wherein the living polyisobutene formed in the polymerization of isobutene or of the isobutene-containing monomer mixture is reacted with at least one comonomer before the polymerization is stopped.

9. The process according to any of the preceding claims, wherein the living polyisobutene formed in the polymerization of isobutene or of the isobutene-containing monomer mixture is reacted with a conjugated diene before the polymerization is stopped.

10. The process according to any of claims 1 to 5, wherein the living polyisobutene formed in the polymerization of isobutene or of the isobutene-containing monomer mixture is reacted with a trialkylallylsilane compound or 1,1-diphenylethene together with a base.

11. The process according to any of claims 1 to 5, wherein the living polyisobutene formed in the polymerization of isobutene or of the isobutene-containing monomer mixture is reacted with a coupling agent so that two or more polymer chains are joined together via their distal end.

12. The process according to claim 11, wherein the coupling agent is selected from among
i) compounds having at least two 5-membered heterocycles containing a heteroatom selected from among oxygen, sulfur and nitrogen,
ii) compounds having at least two trialkylsilyl groups in allylic positions, and
iii) compounds having at least two vinylidene groups conjugated with two aromatic rings.

13. A polyisobutene which is terminated at at least one end of the molecule by a group of the formula II 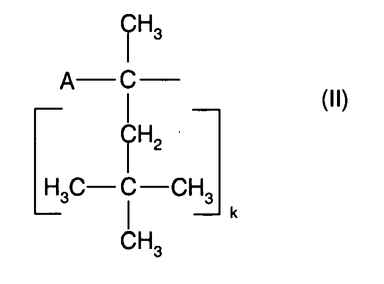 where A is a group of the formula A.3.1 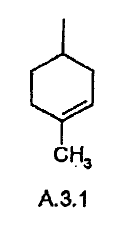 and k is as defined in claim 1,
or a functionalization product thereof which is obtainable by
i) hydrosilylation,
ii) hydrosulfurization,
iii) electrophilic substitution on aromatics,
iv) epoxidation and, if desired, reaction with nucleophiles,
v) hydroboration and, if desired, oxidative cleavage,
vi) reaction with an enophile in an ene reaction,
vii) addition of halogens or hydrogen halides or
viii) hydroformylation.

## Revendications

1. Procédé de préparation de polyisobutènes bifonctionnels, dans lequel on polymérise de l'isobutène ou un mélange de monomères contenant de l'isobutène en présence d'un acide de Lewis et d'un composé de la formule I : 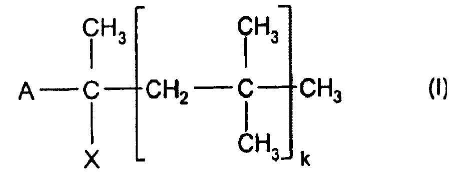 dans laquelle
X représente de l'halogène ou un groupe alcoxy en C₁-C₆ ou acyloxy en C₁-C₆,
A représente un radical de la formule A.2 ou A.3 : 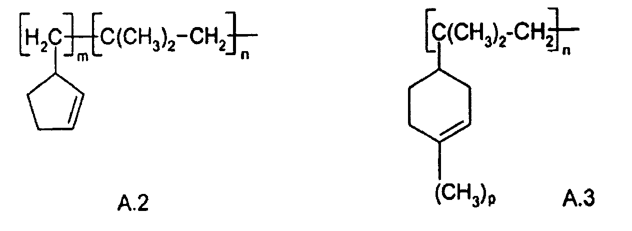
où
m vaut 0 ou 1,
n est un nombre de 0 à 3, et
p vaut 0 ou 1, et
k est un nombre de 0 à 5.

2. Procédé suivant la revendication 1, dans lequel le composé de la formule I est choisi parmi du 2-chloro-2-méthyl-3-(cyclopentèn-3-yl)propane, du 2-chloro-2-méthyl-4-(cyclohexèn-4-yl)pentane et du 2-chloro-2-(1-méthylcyclohexèn-4-yl)propane.

3. Procédé suivant l'une des revendications précédentes, dans lequel l'acide de Lewis est choisi parmi du tétrachlorure de titane, du trichlorure de bore, du tétrachlorure d'étain, du trichlorure d'aluminium, des chlorures de dialkyl-aluminium, des dichlorures d'alkyl-aluminium, du pentachlorure de vanadium, du trichlorure de fer et du trifluorure de bore.

4. Procédé suivant l'une des revendications précédentes, dans lequel la réaction a en outre lieu en présence d'un donneur d'électrons.

5. Procédé suivant la revendication 4, dans lequel le donneur d'électrons est choisi parmi des pyridines, des amides, des lactames, des éthers, des amines, des esters, des thioéthers, des sulfoxydes, des nitriles, des phosphines et des composés organosiliciques aprotiques, non polymérisables, qui présentent au moins un radical organique fixé par l'intermédiaire d'oxygène.

6. Procédé suivant l'une des revendications précédentes, dans lequel la polymérisation est interrompue par addition d'un composé protique.

7. Procédé suivant la revendication 6, dans lequel le produit obtenu après interruption de la polymérisation par un composé protique est ensuite traité thermiquement ou avec une base.

8. Procédé suivant l'une des revendications précédentes, dans lequel le polyisobutène vivant formé au cours de la polymérisation d'isobutène ou du mélange de monomères contenant de l'isobutène est, avant l'interruption de la polymérisation, amené à réagir avec au moins un comonomère.

9. Procédé suivant l'une des revendications précédentes, dans lequel le polyisobutène vivant formé au cours de la polymérisation d'isobutène ou du mélange de monomères contenant de l'isobutène est, avant l'interruption de la polymérisation, amené à réagir avec un diène conjugué.

10. Procédé suivant l'une des revendications 1 à 5, dans lequel le polyisobutène vivant formé au cours de la polymérisation d'isobutène ou du mélange de monomères contenant de l'isobutène est amené à réagir avec un composé de trialkylallylsilane ou du 1,1-diphényléthène conjointement à une base.

11. Procédé suivant l'une des revendications 1 à 5, dans lequel le polyisobutène vivant formé au cours de la polymérisation d'isobutène ou du mélange de monomères contenant de l'isobutène est amené à réagir avec un agent de couplage, deux ou plusieurs chaînes polymères étant mutuellement reliées par leurs extrémités distales.

12. Procédé suivant la revendication 11, dans lequel l'agent de couplage est choisi parmi
i) des composés qui présentent au moins deux hétérocycles pentagonaux comportant un hétéroatome choisi parmi de l'oxygène, du soufre et de l'azote,
ii)des composés comportant au moins deux groupes trialkylsilyle en position allylique, et
iii) des composés comportant au moins deux groupes vinylidène agencés de manière conjuguée par rapport à respectivement deux noyaux aromatiques.

13. Polyisobutène, terminé à au moins une extrémité moléculaire par un groupe de la formule II : 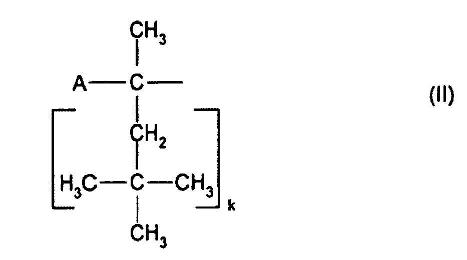 dans laquelle A représente un groupe de la formule A.3.1 : 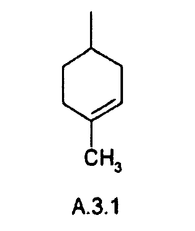 et k est défini comme dans la revendication 1,
ou un produit de fonctionnalisation de celui-ci, que l'on peut obtenir par
i) hydrosilylation,
ii)hydrosulfuration,
iii) substitution électrophile sur des substances aromatiques,
iv)époxydation et éventuellement réaction avec des nucléophiles,
v) hydroboration et éventuellement clivage par oxydation,
vi) réaction avec un énophile dans une ène-réaction,
vii) addition d'halogènes ou d'hydracides halogénés, ou
viii)hydroformylation.
